# EUROPEAN PATENT SPECIFICATION

(11) **EP 3 950 407 B1**
(45) Date of publication and mention of the grant of the patent: **14.02.2024**
(21) Application number: 20851757.3
(22) Date of filing: 05.08.2020
(51) Int. Cl.: H01F 27/02, H01F 38/14, H02J 7/00, H02J 50/10, B60L 53/122, B60L 53/12, B60L 53/80

(54) **VEHICLE-MOUNTED POWER BATTERY, RECHARGEABLE ENERGY STORAGE SYSTEM, AND ELECTRIC CAR**
FAHRZEUGMONTIERTE BATTERIE, WIEDERAUFLADBARES ENERGIESPEICHERSYSTEM UND ELEKTROFAHRZEUG
BATTERIE D'ALIMENTATION MONTÉE SUR VÉHICULE, SYSTÈME DE STOCKAGE D'ÉNERGIE RECHARGEABLE ET VOITURE ÉLECTRIQUE

(30) Priority: 09.08.2019 CN 201910735601
(43) Date of publication of application: 09.02.2022
(73) Proprietor: Huawei Digital Power Technologies Co., Ltd., Shenzhen, Guangdong 518043 (CN)
(72) Inventor: ZHANG, Xiaofei, Shenzhen, Guangdong 518129 (CN)
(74) Representative: Thun, Clemens
(86) International application number: PCT/CN2020/106927
(87) International publication number: WO 2021/027641

(56) References cited:
- EP-A1- 3 293 029
- CN-A- 102 983 375
- CN-A- 105 531 908
- CN-A- 110 525 240
- CN-U- 201 928 065
- JP-A- 2019 092 266
- US-A1- 2011 084 658
- US-A1- 2012 181 981
- US-A1- 2017 136 910

## Description

### TECHNICAL FIELD

This application belongs to the field of energy technologies, and specifically relates to a vehicle-mounted power battery, a chargeable/dischargeable energy storage system, and an electric vehicle.

### BACKGROUND

An electric vehicle mainly has two charging modes: conductive charging (wired charging) and nonconductive charging (wireless charging). As electric vehicle parc increases and a market expands, an electric vehicle using the wireless charging mode is gradually accepted by today's vehicle industry, and becomes a technical innovation direction of the electric vehicle industry in the future, because the electric vehicle has excellent features such as high convenience, no manual intervention, low maintenance costs, a small occupation area, no electricity leakage risk, and dynamic charging during traveling of the vehicle.

In a current electric vehicle using wireless charging, there are a relatively large quantity of electronic components assembled on a vehicle body. When the electric vehicle is produced and assembled, a location at which each electronic component is installed on the vehicle body needs to be independently designed based on a specific structure of the electronic component. As a result, a production process of the electric vehicle is relatively long, and assembly in a production line is relatively complex, which reduces vehicle production efficiency.
The document US 2012/181981 A1 shows an electrically powered vehicle with a battery. A battery charging coil is arranged in an opening of a battery housing
The document EP 3 293 029 A1 shows an electrically powered vehicle with a battery. The battery has a metal housing. A charging coil is arranged in a separate housing under the battery housing.

### SUMMARY

Embodiments of this application provide a vehicle-mounted power battery, a chargeable/dischargeable energy storage system, and an electric vehicle, to simplify structures of the vehicle-mounted power battery, the chargeable/dischargeable energy storage system, and the electric vehicle, shorten a production process, reduce complexity of assembly in a production line, and improve production efficiency. This problem is solved by the subject matter of the independent claims. Further implementation forms are provided in the dependent claims.

The vehicle-mounted power battery in the embodiments of this application includes a housing, a charging reception coil, and a battery core module. The housing includes a recess disposed on an outer surface of the housing and an accommodation cavity disposed in the housing. The charging reception coil is accommodated in the recess, and is configured to receive energy from a power supply apparatus and output the energy. The battery core module is accommodated in the accommodation cavity and electrically connected to the charging reception coil, and is configured to receive and store the energy output by the charging reception coil.

In the vehicle-mounted power battery of this application, the charging reception coil and the battery core module are integrated into one part by sharing the housing, and the charging reception coil and the battery core module can be simultaneously installed only by separately assembling only the vehicle-mounted power battery. This not only simplifies a structure of the vehicle-mounted power battery, but also shortens a production process of the vehicle-mounted power battery, reduces complexity of assembly in a production line, and improves production efficiency. In addition, when the vehicle-mounted power battery works in a low-temperature environment, because both the charging reception coil and the battery core module are accommodated in the accommodation cavity, heat generated by the charging reception coil may fulfil a function of accelerating heating of the battery core module, to effectively avoid lithium plating of a battery core caused by an excessively high charging speed when the battery core module works in the low-temperature environment, thereby prolonging a lifespan of the battery core module, and further prolonging a lifespan of the vehicle-mounted power battery.

In some embodiments, the vehicle-mounted power battery further includes a cover plate. The cover plate is detachably assembled on the housing to cover the recess, to isolate the charging reception coil from external water and air to protect the charging reception coil in the recess.

In an implementation, the cover plate includes a charging part, the charging part is made of a non-metal material, and the charging reception coil receives the energy from the power supply apparatus by using the charging part.

In the vehicle-mounted power battery in the embodiments of this application, the energy is transmitted between the charging reception coil and the power supply apparatus by using an alternating electromagnetic field induction principle. The charging part made of the non-metal material does not interfere with energy transmission between the power supply apparatus and the charging reception coil, thereby effectively ensuring that the vehicle-mounted power battery wirelessly receives the energy from the power supply apparatus, to wirelessly charge the vehicle-mounted power battery.

In some embodiments, the vehicle-mounted power battery further includes a rectifier. The rectifier is accommodated in the accommodation cavity, and is connected between the charging reception coil and the battery core module. The rectifier is configured to: receive the energy output by the charging reception coil, convert the energy, and output converted energy. The battery core module is configured to receive and store the energy output by the rectifier.

In the vehicle-mounted power battery in the embodiments, the rectifier is integrated with the charging reception coil and the battery core module into one part by sharing the housing, to further simplify a structure of the vehicle-mounted power battery, shorten a production process of the vehicle-mounted power battery, reduce complexity of assembly in a production line, and improve production efficiency. In addition, the charging reception coil, the rectifier, and the battery core module are all accommodated in the accommodation cavity of the housing, and the three components may be directly connected to each other through a copper bar and a bolt or copper bar welding, instead of being connected through a high and low voltage cable and interface. This not only saves expensive high-voltage terminal and high-voltage cables, reduces costs, and improves electromagnetic compatibility of the vehicle-mounted power battery, but also improves foreign object prevention and waterproof performance of the vehicle-mounted power battery, reduces electricity leakage risks in installation, and improves reliability.

In an implementation, the vehicle-mounted power battery further includes a charging compensation capacitor. The charging compensation capacitor is connected between the rectifier and the charging reception coil. The charging compensation capacitor is configured to compensate for an inductance of the charging reception coil, to improve working efficiency of the charging reception coil.

In some embodiments, the vehicle-mounted power battery further includes a heat sink. The heat sink is accommodated in the accommodation cavity or embedded in the housing, and is configured to dissipate heat from the charging reception coil, the rectifier, and the battery core module, to dissipate, in time, the heat generated during working of the charging reception coil, the rectifier, and the battery core module, thereby improving working efficiency of the charging reception coil, the rectifier, and the battery core module. In this embodiment, the heat sink simultaneously dissipates the heat from the charging reception coil, the rectifier, and the battery core module, and there is no need to separately dissipate the heat from the charging reception coil, the rectifier, and the battery core module by using a plurality of heat sinks. This not only reduces heat sink costs, but also simplifies an overall structure of the vehicle-mounted power battery.

In an implementation, the heat sink is a metal heat dissipation plate, and the metal heat dissipation plate is located on a side that is of the charging reception coil and that is away from the cover plate. The metal heat dissipation plate cannot only effectively dissipate the heat from the charging reception coil, the rectifier, and the battery core module, but also fulfil an electromagnetic shielding function on the charging reception coil, to shield an electromagnetic field leaked by the charging reception coil without additionally making a dedicated shielding design for the charging reception coil, thereby reducing costs. In addition, the metal heat dissipation plate is disposed on the side that is of the charging reception coil and that is away from the cover plate, so that the metal heat dissipation plate is prevented from affecting the charging reception coil in receiving the energy from the power supply apparatus by using the charging part, thereby improving charging efficiency of the vehicle-mounted power battery.

The battery core module and the rectifier are located on a side that is of the metal heat dissipation plate and that is away from to the charging reception coil, to prevent the battery core module and the rectifier from being affected by an electromagnetic field leaked by the charging reception coil.

In an implementation, the rectifier and the battery core module are in contact with the metal heat dissipation plate by using a thermal conductivity adhesive, to improve efficiency of dissipating the heat from the rectifier and the battery core module by the metal heat dissipation plate.

In some embodiments, the vehicle-mounted power battery further includes a controller. The controller is accommodated in the accommodation cavity and electrically connected to the charging reception coil, the rectifier, and the battery core module, to simultaneously monitor statuses such as a current, a voltage, and a temperature of the charging reception coil, the rectifier, and the battery core module, and there is no need to separately control the charging reception coil, the rectifier, and the battery core module by using a plurality of controllers. This not only reduces controller costs, but also avoids communication between a plurality of controllers, thereby reducing terminals and bundles connected between the controllers, and optimizing a charging process of the vehicle-mounted power battery.

In an implementation, the controller includes a communications module and a control module, and the control module is electrically connected to the communications module. The control module is configured to send a control signal based on information such as a voltage and a temperature of the battery core module. The communications module is configured to receive the control signal sent by the control module, and wirelessly send the control signal. The power supply apparatus wirelessly receives the control signal sent by the communications module, and transmits energy to the vehicle-mounted power battery based on the control signal, to implement wireless communication between the controller and the power supply apparatus.

In an implementation, the communications module is a Wi-Fi module or a Bluetooth module.

In some embodiments, the vehicle-mounted power battery further includes an inverter. The inverter is accommodated in the accommodation cavity and electrically connected to the battery core module, and is configured to convert energy stored in the battery core module, and output converted energy to an external load. The vehicle-mounted power battery in the embodiments of this application also integrates the inverter into the accommodation cavity, so that the vehicle-mounted power battery integrates charging, power storage, and discharging functions, thereby further reducing a volume, a weight, and costs of the vehicle-mounted power battery. Therefore, a structural design, a heat dissipation system design, and an electrical design of the vehicle-mounted power battery are more integrated, to lower a requirement of the vehicle-mounted power battery for an assembling environment to a maximum extent, and improve electromagnetic compatibility of the vehicle-mounted power battery.

In an implementation, the inverter and the battery core module are located on a same side of the metal heat dissipation plate, to prevent the inverter from being affected by an electromagnetic field leaked by the charging reception coil.

In some embodiment, the vehicle-mounted power battery further includes a power supply transmission coil and a power supply reception coil. The power supply transmission coil is located inside the accommodation cavity and electrically connected to the inverter, and is configured to receive the energy output by the inverter, and transmit the energy. The power supply reception coil is located outside the accommodation cavity, and is configured to: receive the energy transmitted by the power supply transmission coil, and output the energy to the external load, to implement wireless power supply from the vehicle-mounted power battery to the external load. The vehicle-mounted power battery outputs, to the external load by using the power supply transmission coil and the power supply reception coil, the energy that is output by the inverter, and a high and low voltage connector between the inverter and the external load is cancelled. This not only saves expensive high and low voltage connectors and improves electromagnetic compatibility of the vehicle-mounted power battery, but also improves waterproof performance and a water fording capability of the vehicle-mounted power battery, reduces electricity leakage risks, and improves reliability.

In some embodiments, a gap connected to the accommodation cavity is disposed on the housing, and the power supply transmission coil and the power supply reception coil are respectively located on two sides of the gap. The power supply reception coil receives, through the gap, the energy transmitted by the power supply transmission coil. The energy is transmitted between the power supply transmission coil and the power supply reception coil by using an alternating electromagnetic field induction principle. Design of the gap effectively ensures energy transmission between the power supply transmission coil and the power supply reception coil, and implements wireless power supply from the vehicle-mounted power battery to the external load.

In an implementation, the housing is made of a metal material. The housing made of the metal material can fulfil a function of centrally shielding high-voltage devices, thereby reducing electromagnetic radiation of the vehicle-mounted power battery, reducing electromagnetic interference of the vehicle-mounted power battery to another component around, and improving electromagnetic compatibility of the vehicle-mounted power battery.

In an implementation, the housing includes a power supply part, the power supply part is made of a non-metal material, and the power supply reception coil receives the energy from the power supply transmission coil by using the power supply part. The energy is transmitted between the power supply transmission coil and the power supply reception coil by using an alternating electromagnetic field induction principle. Use of the power supply part made of the non-metal material effectively ensures energy transmission between the power supply transmission coil and the power supply reception coil, and implements wireless power supply from the vehicle-mounted power battery to the external load.

In an implementation, the housing further includes a body part. The body part is made of a metal material, and the body part and the power supply part form the accommodation cavity through enclosure. The body part made of the metal material can fulfil a function of centrally shielding high-voltage devices, thereby reducing electromagnetic radiation of the vehicle-mounted power battery, reducing interference of the vehicle-mounted power battery to a device around, and improving electromagnetic compatibility of the vehicle-mounted power battery.

The accommodation cavity is a closed cavity, to prevent an external foreign object from entering the accommodation cavity, improve foreign object prevention and waterproof performance of the vehicle-mounted power battery, improve a water fording capability of the vehicle-mounted power battery, and reduce security risks caused by electricity leakage.

The chargeable/dischargeable energy storage system in the embodiments of this application includes a power supply apparatus and any vehicle-mounted power battery described above. The power supply apparatus is configured to transmit energy, and the vehicle-mounted power battery is configured to receive and store the energy transmitted by the power supply apparatus.

In the chargeable/dischargeable energy storage system in the embodiments of this application, the charging reception coil and the battery core module of the vehicle-mounted power battery are integrated into one part by sharing the housing. When the chargeable/dischargeable energy storage system is produced and assembled, the charging reception coil and the battery core module can be simultaneously installed only by separately installing the vehicle-mounted power battery. This simplifies a structure of the chargeable/dischargeable energy storage system, shortens a production process of the chargeable/dischargeable energy storage system, reduces complexity of assembly in a production line, and improves production efficiency.

In some embodiments, the power supply apparatus includes a power factor correction module, an inverter module, and a charging transmission coil. The power factor correction module is configured to rectify an alternating current obtained from an external power grid into a direct current, and output the direct current. The inverter module is configured to invert the received direct current that is output by the power factor correction module into an alternating current, and output the alternating current. The charging transmission coil is configured to receive the alternating current that is output by the inverter module, and generate an alternating magnetic field of a same frequency as the alternating magnetic field, so that the power supply apparatus transmits energy to the vehicle-mounted power battery.

In an implementation, the power supply apparatus further includes a power supply compensation capacitor. The power supply compensation capacitor is connected between the inverter module and the charging transmission coil, and is configured to compensate for an inductance of the charging transmission coil, to improve working efficiency of the charging transmission coil.

In an implementation, the power supply apparatus further includes a direct-current voltage regulation module. The direct-current voltage regulation module is connected between the power factor correction module and the inverter module. The direct-current voltage regulation module is configured to receive the direct current that is output by the power factor correction module, regulate a voltage of the direct current, and output a regulated direct current. The inverter module is configured to receive the direct current that is output by the direct-current voltage regulation module, invert the direct current into an alternating current, and output the alternating current.

The electric vehicle in the embodiments of this application includes a vehicle body and any vehicle-mounted power battery described above, and the vehicle-mounted power battery is detachably installed on a chassis of the vehicle body.

In the electric vehicle in the embodiments of this application, the charging reception coil and the battery core module of the vehicle-mounted power battery are integrated into one part by sharing the housing. When the electric vehicle is produced and assembled, the charging reception coil and the battery core module can be simultaneously installed only by separately installing the vehicle-mounted power battery. This simplifies a structure of the electric vehicle, shortens a production process of the electric vehicle, reduces complexity of assembly in a production line, and improves production efficiency.

In the vehicle-mounted power battery, the chargeable/dischargeable energy storage system, and the electric vehicle in the embodiments of this application, the charging reception coil and the battery core module of the vehicle-mounted power battery are integrated into one part by sharing the housing, and the charging reception coil and the battery core module can be simultaneously installed only by separately installing the vehicle-mounted power battery. This simplifies structures of the vehicle-mounted power battery, the chargeable/dischargeable energy storage system, and the electric vehicle, shortens a production process, reduces complexity of assembly in a production line, and improving production efficiency.

### BRIEF DESCRIPTION OF DRAWINGS

To describe the technical solutions in embodiments of this application or in the background more clearly, the following briefly describes the accompanying drawings required for describing the embodiments of this application or the background.
FIG. 1 is a schematic diagram of a structure of a chargeable/dischargeable energy storage system according to an embodiment of this application;
FIG. 2 is a schematic diagram of a specific structure of a power supply apparatus and a vehicle-mounted power battery in the chargeable/dischargeable energy storage system shown in FIG. 1;
FIG. 3 is a schematic diagram of a structure of an electric vehicle according to an embodiment of this application;
FIG. 4 is a schematic diagram of a cross-section structure of a vehicle-mounted power battery according to an embodiment of this application;
FIG. 5 is a schematic diagram of a cross-section structure of the vehicle-mounted power battery shown in FIG. 4 along an A-A direction;
FIG. 6 is a schematic diagram of an amplified structure of a base plate in the vehicle-mounted power battery shown in FIG. 4;
FIG. 7 is a schematic diagram of a structure of a controller in the vehicle-mounted power battery shown in FIG. 4;
FIG. 8 is a schematic diagram of a structure of a second vehicle-mounted power battery according to an embodiment of this application;
FIG. 9 is a schematic diagram of a structure of a third vehicle-mounted power battery according to an embodiment of this application; and
FIG. 10 is a schematic diagram of a structure of a fourth vehicle-mounted power battery according to an embodiment of this application.

### DESCRIPTION OF EMBODIMENTS

The following describes embodiments of this application with reference to the accompanying drawings in the embodiments of this application.

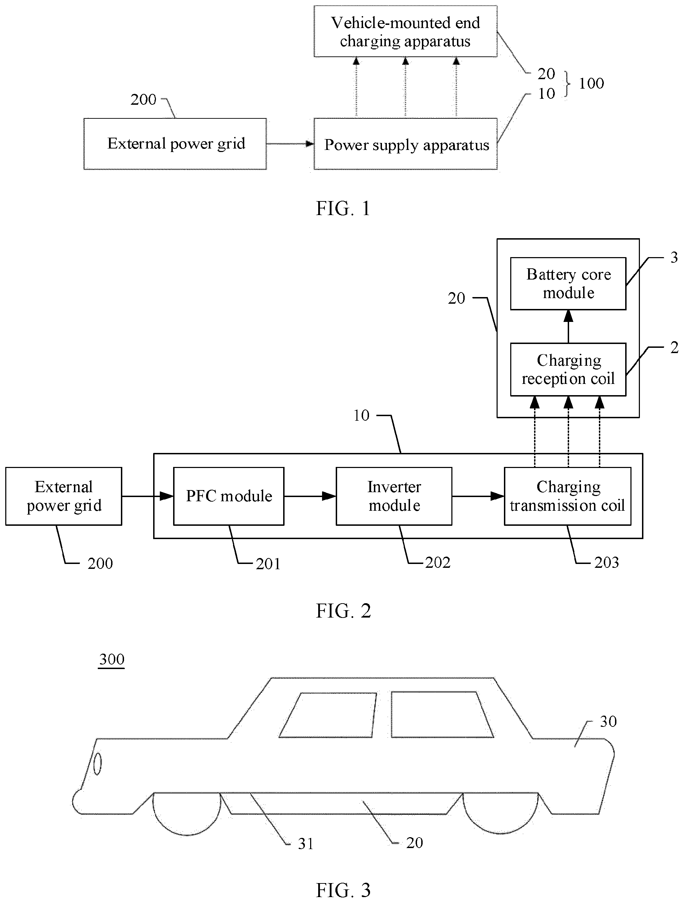

FIG. 1 is a schematic diagram of a structure of a chargeable/dischargeable energy storage system 100 according to an embodiment of this application.

The chargeable/dischargeable energy storage system 100 provided in this embodiment of this application is an energy storage system that integrates charging, power storage, and discharging functions. The chargeable/dischargeable energy storage system 100 includes a power supply apparatus 10 and a vehicle-mounted power battery 20. The power supply apparatus 10 is configured to receive energy from an external power grid 200 (such as mains power), and transmit the energy. The vehicle-mounted power battery 20 is configured to receive and store the energy transmitted by the power supply apparatus 10.

Referring to FIG. 1 and FIG. 2, FIG. 2 is a schematic diagram of a specific structure of the power supply apparatus 10 and the vehicle-mounted power battery 20 in the chargeable/dischargeable energy storage system 100 shown in FIG. 1.

The power supply apparatus 10 is usually installed on the ground, and may also be referred to as a ground-end power supply apparatus, or is referred to as a ground end for short. Specifically, the power supply apparatus 10 includes a power factor correction (PFC, Power Factor Correction) module 201, an inverter module 202, and a charging transmission coil 203. The power supply apparatus 10 obtains power from an external power grid 200 in a three-phase form or a single-phase form, and outputs a 50 Hz power-frequency alternating current (the 50 Hz power-frequency alternating current is used as an example) through an overvoltage/overcurrent protection circuit and a filter circuit (not shown in the figure). The power factor correction module 201 receives the 50 Hz power-frequency alternating current, rectifies the alternating current into a direct current, and outputs the direct current. The inverter module 202 receives the direct current that is output by the power factor correction module 201, inverts the direct current into an 85 kHz high-frequency alternating current, and outputs the 85 kHz high-frequency alternating current. The charging transmission coil 203 receives the 85 kHz high-frequency alternating current that is output by the inverter module 202, the 85 kHz high-frequency alternating current flows in the charging transmission coil 203 and generates an alternating magnetic field of the same frequency, to transmit energy to the vehicle-mounted power battery 20. A working frequency of the 85 kHz high-frequency alternating current is specified by the IEC (International Electrotechnical Commission, International Electrotechnical Commission) 61980.

It should be understood that in another embodiment of this application, the power supply apparatus may further include a direct-current voltage regulation module (DC-DC converter, Direct Current-Direct Current converter) and/or a power supply compensation capacitor. The direct-current voltage regulation module is connected between the power factor correction module and the inverter module. The direct-current voltage regulation module receives the direct current that is output by the power factor correction module, performs direct-current voltage regulation (boost or buck) based on an actual requirement, and outputs a regulated direct current. The inverter module receives the direct current that is output by the direct-current voltage regulation module, inverts the direct current into an alternating current, and outputs the alternating current. The power supply compensation capacitor is connected between the inverter module and the charging transmission coil. The power supply compensation capacitor compensates for an inductance of the charging transmission coil, so that the charging transmission coil implements resonance at 85 kHz, to improve efficiency of the charging transmission coil. It can be understood that based on an actual requirement, only the direct-current voltage regulation module or the power supply compensation capacitor may exist, or both the direct-current voltage regulation module and the power supply compensation capacitor may exist. This is not specifically limited in this application.

The vehicle-mounted power battery 20 senses the alternating magnetic field generated by the charging transmission coil 203, to receive the energy transmitted by the power supply apparatus 10. Specifically, the vehicle-mounted power battery 20 includes a housing (not shown in the figure), a charging reception coil 2, and a battery core module 3. The housing includes a recess disposed on an outer surface of the housing and an accommodation cavity disposed in the housing. The charging reception coil 2 is accommodated in the recess, and is configured to sense the alternating magnetic field generated by the charging transmission coil 203 to generate an induced current of a same frequency as the alternating magnetic field, to receive the energy from the power supply apparatus 10 and output the energy. The battery core module 3 is accommodated in the accommodation cavity and electrically connected to the charging reception coil 2, and is configured to receive and store the energy output by the charging reception coil 2, to implement charging and storage of the vehicle-mounted power battery 20. When the vehicle-mounted power battery 20 is used in a low-temperature environment, because the charging reception coil 2 and the battery core module 3 are integrated into one part by sharing the housing, heat generated by the charging reception coil 2 may accelerate heating of the battery core module 3, to avoid lithium plating of a battery core caused by an excessively high charging speed when the battery core module 3 works in the low-temperature environment, thereby prolonging a lifespan of the battery core module 3, and further prolonging a lifespan of the vehicle-mounted power battery 20 and the chargeable/dischargeable energy storage system 100.

In the chargeable/dischargeable energy storage system 100 provided in this embodiment of this application, the charging reception coil 2 and the battery core module 3 are integrated into one part by sharing the housing. In a process of producing and assembling the chargeable/dischargeable energy storage system 100, the charging reception coil 2 and the battery core module 3 can be simultaneously installed only by separately installing the vehicle-mounted power battery 20. This simplifies a structure of the chargeable/dischargeable energy storage system 100, reduces complexity of assembling the chargeable/dischargeable energy storage system 100 in a production line, shortens a production and assembly time of the chargeable/dischargeable energy storage system 100, and improves production and assembly efficiency of the chargeable/dischargeable energy storage system 100.

FIG. 3 is a schematic diagram of a structure of an electric vehicle 300 according to an embodiment of this application.

The electric vehicle 300 includes the vehicle-mounted power battery 20 and a vehicle body 30, and the vehicle-mounted power battery 20 is detachably installed on a chassis 31 of the vehicle body 30. When the electric vehicle 300 needs to be charged, the electric vehicle 300 can be charged as long as the electric vehicle 300 travels to a location at which the charging reception coil 2 of the vehicle-mounted power battery 20 is opposite to the charging transmission coil 103 of the ground-end power supply apparatus 10, thereby improving charging convenience of the electric vehicle 300.

In this embodiment of this application, the charging reception coil 2 and the battery core module 3 are integrated into one part by sharing the housing, which facilitates vehicle integration and reduces costs of the entire vehicle. In addition, in a process of processing and assembling the electric vehicle 300, the charging reception coil 2 and the battery core module 3 can be simultaneously installed only by separately installing the vehicle-mounted power battery 20 on the chassis 31. This reduces complexity of assembling the electric vehicle 300 in a production line, shortens a production and assembly time of the electric vehicle 300, and improves production and assembly efficiency of the electric vehicle 300. Moreover, the charging reception coil 2 and the battery core module 3 of the vehicle-mounted power battery 20 are integrated into one part, so that during vehicle design, a structural design of the chassis 31 and coordination between the charging reception coil 2 and the battery core module 3 do not need to be considered, thereby simplifying the structural design of the vehicle chassis and shortening a time of designing the entire vehicle. In addition, when the electric vehicle 300 is charged in a low-temperature environment, because the charging reception coil 2 and the battery core module 3 are integrated into one part, heat generated by the charging reception coil 2 may accelerate heating of the battery core module 3, to avoid lithium plating of a battery core caused by an excessively high charging speed when the battery core module 3 works in the low-temperature environment, thereby prolonging a lifespan of the battery core module 3, and further prolonging a lifespan of the electric vehicle 300.

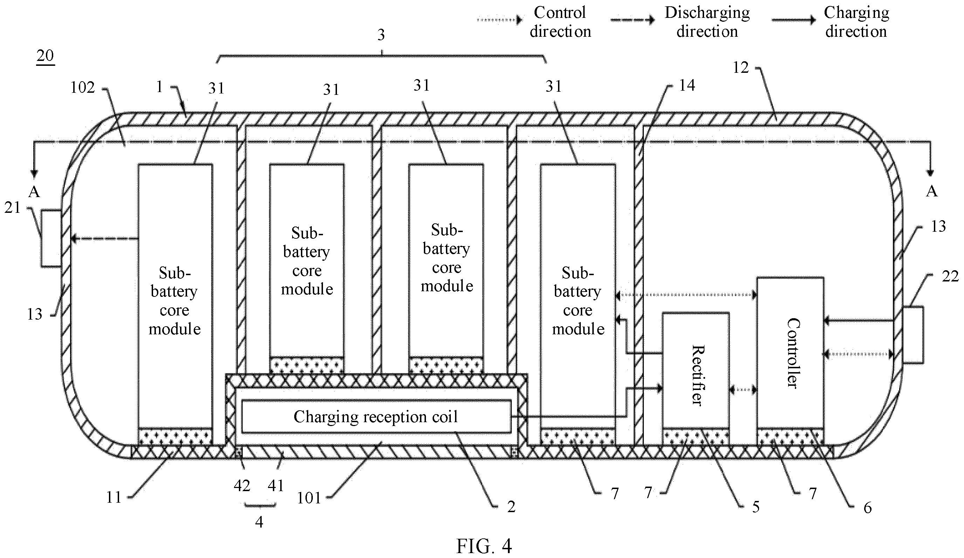

Referring to FIG. 2 to FIG. 4, FIG. 4 is a schematic diagram of a cross-section structure of a vehicle-mounted power battery 20 according to an embodiment of this application. The vehicle-mounted power battery 20 shown in FIG. 4 corresponds to the vehicle-mounted power battery 20 shown in FIG. 1 to FIG. 3.

In this embodiment of this application, the vehicle-mounted power battery 20 includes a housing 1, a charging reception coil 2, a battery core module 3, a cover plate 4, a rectifier 5, a heat sink, and a controller 6. The charging reception coil 2 is accommodated in a recess 101, and the cover plate 4 is detachably assembled on the housing 1 to cover the recess 101. The battery core module 3, the rectifier 5, and the controller7 are all accommodated in the accommodation cavity 101, and the heat sink is installed in the housing 1. It should be understood that in another embodiment, the heat sink may be accommodated in the accommodation cavity, and a specific structure of the heat sink is not specifically limited in this application.

It should be understood that in an existing electric vehicle, a vehicle-mounted end component and a power battery pack of a charging system are separately installed at a bottom of the vehicle as two independent vehicle-mounted devices. The two devices need to be separately designed and installed, which not only prolongs a process of producing and assembling the electric vehicle, but also requires relatively high costs. In the vehicle-mounted power battery 20 provided in this embodiment of this application, the housing 1 is a housing of the power battery pack, the charging reception coil 2 is accommodated in the recess 101 formed on the housing 1, the battery core module 3, the rectifier 4, and the controller 7 are all accommodated in the accommodation cavity 101 of the housing 1, and the heat sink is embedded in the housing 1, which is equivalent to canceling an existing housing of the vehicle-mounted end component, integrating the charging reception coil and the rectifier of the vehicle-mounted end component into the power battery pack to share a battery housing with the battery core module of the power battery pack. In other words, the vehicle-mounted end component and the power battery pack are integrated into one part, thereby simplifying overall structures of the vehicle-mounted end component and the power battery pack. It can be understood that in another embodiment, the housing may be a housing of the vehicle-mounted end component, which is equivalent to canceling the housing of the power battery pack, and integrating the battery core module of the power battery pack into the vehicle-mounted end component to share the housing of the vehicle-mounted end component with the charging reception coil and the rectifier of the vehicle-mounted end component. Alternatively, both the housing of the vehicle-mounted end component and the housing of the power battery pack are cancelled, and the charging reception coil and the rectifier of the vehicle-mounted end component and the battery core module of the power battery pack are integrated into one part in a new housing. This is not specifically limited in this application.

When the vehicle-mounted power battery 20 is assembled on the electric vehicle 300, the vehicle-mounted end component and the power battery pack can be simultaneously produced and assembled only by assembling the vehicle-mounted power battery 20 on the chassis 31 of the electric vehicle 300. This greatly simplifies complexity of assembling the electric vehicle 300 in a production line, shortens a time consumed for assembly in the production line, and improves production and assembly efficiency. In addition, when the vehicle-mounted end component and the power battery pack are integrated into one part, during vehicle design, a structural design of a vehicle chassis and coordination between the vehicle-mounted end component and the power battery pack do not need to be considered excessively. This helps simplify the structural design of the chassis, shorten a chassis design process of the entire vehicle, simplify a subsequent assembly process in a production line, and improve production efficiency.

According to the invention, the housing 1 includes a base plate 11, a top plate 12 disposed opposite to the base plate 11, and two side plates 13 connected between the base plate 11 and the top plate 12. In an implementation, when the vehicle-mounted power battery 20 is installed on the chassis 31 of the electric vehicle 300, the top plate 12 is a part in which the housing 1 is in contact with the chassis 31, and the base plate 11 is a part in which the housing 1 is away from the chassis 31. It can be understood that in another embodiment, the housing may include an upper housing and a lower housing, and the upper housing and the lower housing may be buckled to form the housing. A structural composition of the housing is not specifically limited in this embodiment of this application.

According to the invention, the base plate 11 is concave in a direction facing the top plate 12 to form the recess 101. When the vehicle-mounted power battery 20 needs to be charged, the electric vehicle 300 travels to location at which an opening of the recess 101 is opposite to the charging transmission coil 103 of the power supply apparatus 10, and the charging reception coil 2 accommodated in the recess 101 senses an alternating magnetic field of the charging transmission coil 103 to generate an induced current, to wirelessly receive energy transmitted by the power supply apparatus 10. It can be understood that the charging reception coil 2 is accommodated in the recess 101. Therefore, when the vehicle-mounted power battery 20 is assembled on the chassis 31, the charging reception coil 2 does not protrude from an outer surface of the housing 1, and is not prone to be scratched and then damaged during driving of the electric vehicle 300. In addition, the charging reception coil 2 is accommodated in the recess 101 instead of being disposed protruding from the housing 1, and the base plate 11, the top plate 12, and the two side plates 13 form the housing 1 in a square shape through enclosure. This not only facilitates installation and detaching of the vehicle-mounted power battery 20, but also simplifies a structural design of the chassis 31 of the electric vehicle 300, thereby helping improve production efficiency and a production capacity of the electric vehicle 300. It should be noted that in another embodiment, an accommodation recess may be disposed in a direction in which the base plate is away from the top plate, and the charging reception coil may be accommodated in the accommodation recess.

The cover plate 4 is detachably assembled on the base plate 11 to cover the recess 101. Specifically, the cover plate 4 is assembled on a recess wall of the recess 101 to seal the recess 101, to prevent external water or oxygen from entering the recess 101 to damage the charging reception coil 2. In this implementation, the charging reception coil 2 is detachably assembled on the cover plate 4, and the cover plate 4 is assembled on the housing 1, to fasten the charging reception coil 2 to the recess 101, so that the charging reception coil 2 does not randomly wobble in the recess 101, thereby avoiding a problem that the charging reception coil 2 cannot be aligned with the charging transmission coil 103 when the vehicle-mounted power battery 20 is charged. It can be understood that in another implementation, the charging reception coil may be detachably assembled on a recess wall of the recess. This is not specifically limited in this application. It should be understood that the detachable assembly manner in this application includes but is not limited to a screw fastening manner, a bolt fastening manner, or the like.

In an implementation, the cover plate 4 includes a charging part 41 and a fastening part 42. The charging part 41 is made of a non-metal material. The charging reception coil 2 receives, by using the charging part 41, energy transmitted by the power supply apparatus 10. To be specific, the charging reception coil 2 senses, by using the charging part 41, an alternating magnetic field of the charging transmission coil 103 to generate an induced current. It should be understood that the energy is transmitted between the charging reception coil 2 and the charging transmission coil 103 by using an alternating electromagnetic field induction principle. The charging part 41 made of the non-metal material effectively ensures energy transmission between the charging reception coil 2 and the charging transmission coil 103, to charge the vehicle-mounted power battery 20. Specifically, the charging part 41 is a part that is of the cover plate 4 and that is exactly opposite to the charging reception coil 2. To be specific, projection of the charging reception coil 2 on the cover plate 4 exactly covers the charging part 41, so that the charging reception coil 2 can sense, at each location facing a surface of the charging part 41, the alternating magnetic field of the charging transmission coil 103 to generate the induced current. The fastening part 42 is disposed around the charging part 41, and the cover plate 4 is assembled on the base plate 11 by using the fastening part 42. It can be understood that in another implementation, the charging part may not be the part that is of the cover plate and that is exactly opposite to the charging reception coil, or the cover plate is the charging part. A location of the charging part on the cover plate is not specifically limited in this application.

In this embodiment, the base plate 11, the top plate 12, and the two side plates 13 are integrated to form the housing 1. The housing 1 is made of a metal material, and the housing 1 made of the metal material can centrally shield high-voltage devices, which greatly reduces electromagnetic radiation of the vehicle-mounted power battery 20, thereby not only reducing electromagnetic interference of the vehicle-mounted power battery 20 to another vehicle-mounted part and improving electromagnetic compatibility of the vehicle-mounted power battery 20, but also ensuring a relatively low level of an electromagnetic field leaked by the vehicle-mounted power battery 20 and ensuring security of a person near the vehicle-mounted power battery 20. It should be understood that because the charging reception coil 2 is accommodated in the recess 101 of the housing 1, surfaces of the charging reception coil 2 other than a surface opposite to the charging transmission coil 103 are all surrounded by the base plate 11. The base plate 11 made of the metal material can effectively shield an electromagnetic field leaked by another surface of the charging reception coil 2, which cannot only prevent the electromagnetic field generated by the charging reception coil 2 from interfering with normal working of the battery core module 3, the rectifier 4, and the controller 6, but also can maintain the electromagnetic field leaked by the vehicle-mounted power battery 20 at a relatively low level. In addition, an electromagnetic shielding design does not need to be separately made for the charging reception coil 2, thereby reducing manufacturing costs of the vehicle-mounted power battery 20. Certainly, in another implementation, the base plate, the top plate, and the two side plates may be an integrated structure formed through assembly, to improve structural compactness of the housing.

In an implementation, the base plate 11, the top plate 12, and the two side plates 13 form an accommodation cavity 102 through enclosure, to prevent an external foreign object from entering the accommodation cavity 102, thereby improving foreign object prevention performance of the vehicle-mounted power battery 20, improving a water fording capability of the vehicle-mounted power battery 20, and reducing security risks caused by electricity leakage of the vehicle-mounted power battery 20. Both the battery core module 3 and the rectifier 5 are accommodated in the accommodation cavity 101, and the rectifier 5 is connected between the charging reception coil 2 and the battery core module 3. The charging reception coil 2 generates an induced current after sensing, by using the charging part 41, an alternating magnetic field emitted by the charging transmission coil 103 in the power supply apparatus 10, and outputs the induced current to the rectifier 5. The rectifier 5 converts the induced current that is output by the charging reception coil 2 into a direct current, and then outputs the direct current to the battery core module 3. The battery core module 3 receives and stores the direct current that is output by the rectifier 5, to implement a charging function of the vehicle-mounted power battery 20. A charging compensation capacitor (not shown in the figure) is further connected between the rectifier 5 and the charging reception coil 2, and the charging compensation capacitor compensates for an inductance of the charging reception coil 2, so that the charging reception coil 2 generates 85 kHz resonance to improve efficiency.

In this implementation, the vehicle-mounted power battery 20 further has a high-voltage output interface 21. The high-voltage output interface 21 is disposed on one side plate 13 and electrically connected to the battery core module 3, and is configured to transmit, to a high-voltage external load (for example, a drive motor of an electric vehicle), a high-voltage direct current that is output by the battery core module 3, so that the vehicle-mounted power battery 20 supplies power to the high-voltage external load. The vehicle-mounted power battery 20 provided in this embodiment of this application integrates charging, power storage, and discharging functions, and a structural design and an electrical design of the vehicle-mounted power battery 20 are more integrated, thereby simplifying structural design work of the electric vehicle 300 to a maximum extent, and reducing overall design and production costs of the electric vehicle 300.

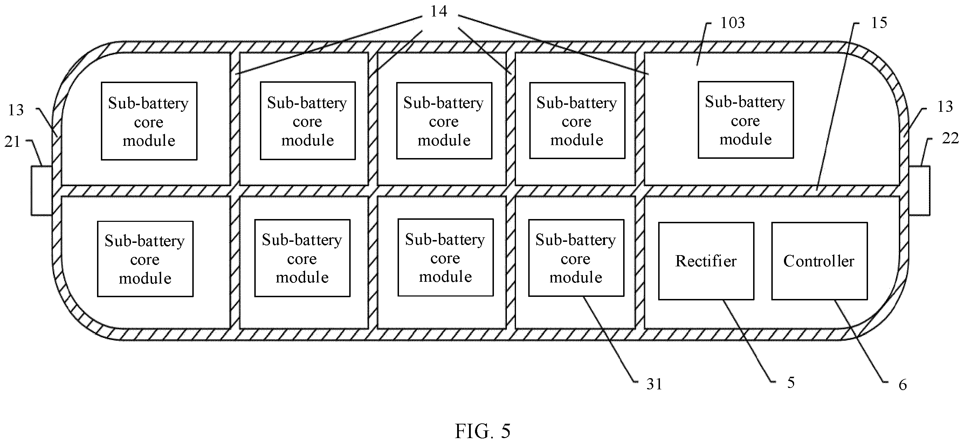

FIG. 5 is a schematic diagram of a cross-section structure of the vehicle-mounted power battery 20 shown in FIG. 4 along an A-A direction.

A plurality of separators are embedded in the accommodation cavity 102. The plurality of separators divide the accommodation cavity 102 into a plurality of sub-accommodation cavities 103, and the plurality of sub-accommodation cavities 103 are configured to separately accommodate the battery core module 3 the rectifier 5, and the controller 7. Specifically, five separators are embedded in the accommodation cavity 102. The five separators include four first separators 14 and one second separator 15. The four first separators 14 are disposed in parallel between the two side plates 13 at intervals, and the second separator 15 is connected between the two side plates 13, to divide the accommodation cavity 102 into ten sub-accommodation cavities 103.

In this implementation, nine of the ten sub-accommodation cavities 103 are configured to accommodate the battery core module 3, and the remaining sub-accommodation cavity 103 is configured to accommodate the rectifier 5 and the controller 6. Specifically, the battery core module 3 includes nine sub-battery core modules 31, a stud (not shown in the figure) is disposed on each of end plates at two ends of each sub-battery core module 31, and each sub-battery core module 31 is fastened to one sub-accommodation cavity 103 by using the stud. The rectifier 5 and the controller 6 are respectively installed in two protective housings (not shown in the figure), and the two protective housings are fastened to a same sub-accommodation cavity 103 by using a stud. The rectifier 5 and the controller 6 are respectively installed in the protective housings, to facilitate installation and fastening of the rectifier 5 and the controller 6. In addition, the protective housing can further isolate the rectifier 4 and the controller 6 from an external environment to protect the rectifier 5 and the controller 6. It can be understood that in another implementation, the battery core module and the protective housing may be fastened to the sub-accommodation cavity by using a screw or a bolt. This is not specifically limited in this application.

In the vehicle-mounted power battery 20 shown in this embodiment of this application, the vehicle-mounted end component and the power battery pack are integrated into one part. The rectifier 5 of the vehicle-mounted end component and the battery core module 3 of the power battery pack may be electrically connected to each other through a copper bar and a bolt or copper bar welding, and no separate high and low voltage cable and connector are needed. This not only saves expensive high-voltage terminal and high-voltage cables and reduces costs, but also avoids an electromagnetic compatibility problem caused by the high and low voltage cable and connector. In addition, when the vehicle-mounted power battery 20 is assembled on the chassis 31 of the electric vehicle 300, arrangement of the high and low voltage cable does not need to be considered, which further simplifies a structural design and assembly in a production line of the chassis 31 of the electric vehicle 300, simplifies a process of installing and detaching the vehicle-mounted power battery 20, and improves production efficiency and a production capacity. Moreover, when a battery of the electric vehicle 300 needs to be changed, if there is no high and low voltage cable and connector, a change process is simpler and has a lower security risk and higher reliability, thereby effectively shortening a battery change time and improving battery change efficiency.

In this embodiment of this application, the heat sink is embedded in the base plate 11 to dissipate heat from the charging reception coil 2, the battery core module 3, and the rectifier 5, to improve working efficiency of the charging reception coil 2, the battery core module 3, and the rectifier 5. Specifically, the heat sink is a heat sink of the power battery pack, and the heat sink simultaneously cools the charging reception coil 2 and the rectifier 5 of the vehicle-mounted end component, and the battery core module 3 of the power battery pack, which is equivalent to that the vehicle-mounted end component shares the heat sink of the power battery pack. In other words, the vehicle-mounted end component and the power battery pack use one heat sink to save heat sinks, which not only reduces heat sink costs, but also simplifies a structure of the vehicle-mounted power battery 20.

In an implementation, the heat sink is a metal heat dissipation plate, and the metal heat dissipation plate is located on a side that is of the charging reception coil 2 and that is away from the cover plate 4, to prevent the metal heat dissipation plate from affecting the charging reception coil 2 in sensing, by using the charging part 41, the alternating magnetic field generated by the charging transmission coil 103, thereby improving charging efficiency of the vehicle-mounted power battery 20. Specifically, the metal heat dissipation plate is located between the charging reception coil 2 and the battery core module 3, and the rectifier 5 and the battery core module 3 are located on a same side of the metal heat dissipation plate. To be specific, the battery core module 3 and the rectifier 4 are located on a side that is of the metal heat dissipation plate and that is away from the charging reception coil 2, to prevent the battery core module 3 and the rectifier 4 from being interfered with by an electromagnetic field leaked by the charging reception coil 2. Both the battery core module 3 and the rectifier 4 are in contact with the metal heat dissipation plate by using a thermally conductive adhesive 8, and heat generated during working of the battery core module 3 and the rectifier 4 is transmitted to the metal heat dissipation plate by using the thermally conductive adhesive 7, thereby improving efficiency of dissipating the heat from battery core module 3 and the rectifier 4 by the metal heat dissipation plate. It can be understood that a heat conduction coefficient of the thermally conductive adhesive 7 is greater than a heat conduction coefficient of air, to accelerate efficiency of heat conduction for the battery core module 3 and the rectifier 4.

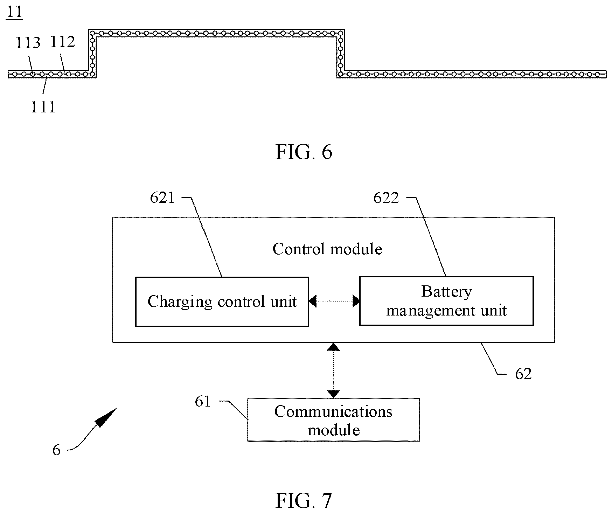

FIG. 6 is a schematic diagram of an amplified structure of the base plate 11 in the vehicle-mounted power battery 20 shown in FIG. 4.

In this implementation, the heat sink is integrated into the base plate 11, that is, the heat sink is the base plate 11. The base plate 11 includes a first plate body 111 and a second plate body 112 that are disposed opposite to each other. A coolant channel 113 is disposed on a surface that is of the first plate body 111 and that faces the top plate 12 to allow condensed water to flow, to take away heat generated during working of the charging reception coil 2, the battery core module 3, and the rectifier 4 to dissipate the heat from each component and improve working efficiency of each component. The second plate body 112 covers the coolant channel 113 to prevent the condensed water in the coolant channel 113 from flowing into the accommodation cavity 102 to damage an electronic component in the accommodation cavity 102. It can be understood that because the charging reception coil 2 is accommodated in the recess 101, that is, three surfaces of the charging reception coil 2 are all surrounded by the coolant channel 113, the coolant channel 113 can effectively dissipate the heat from the charging reception coil 2. In the vehicle-mounted power battery 20 in this embodiment of this application, the heat sink is integrated into the base plate 11, and the coolant channel 113 is disposed in the base plate 11. Therefore, the vehicle-mounted end component and the power battery pack can be simultaneously cooled by using one water cooling system, thereby saving water-cooled systems, reduces water -cooling pipes and connectors that are required by the water cooling system, and reduces costs.

FIG. 7 is a schematic diagram of a specific structure of the controller 6 in the vehicle-mounted power battery 20 shown in FIG. 4.

The controller 6 is accommodated in the accommodation cavity 102 and electrically connected to the charging reception coil 2, the rectifier 4, and the battery core module 3. Specifically, the controller 6 and the rectifier 4 are located in a same sub-accommodation cavity 103. In this embodiment, the vehicle-mounted power battery 20 further has a low-voltage interface 22. The low-voltage interface 22 is disposed on another side plate 13 and electrically connected to the controller 6. The low-voltage interface 22 is not only configured to transmit, to the controller 6, a low-voltage direct current that is output by an external low-voltage power supply, to supply power to the controller 6, but also configured to enable the controller 6 to implement communication with the outside. It should be noted that in another embodiment, a direct-current voltage regulator may be further disposed between the battery core module and the controller. The direct-current voltage regulator is configured to convert a high-voltage current that is output by the battery core module into a low-voltage current, and output the low-voltage current to the controller, to supply power to the controller; or the direct-current voltage regulator may convert a high-voltage current that is output by the battery core module into a low-voltage current, and implement low-voltage power supply to an external load by using the controller and the low-voltage interface.

Specifically, the controller 6 includes a control module 61 and a communications module 62. The control module 61 includes a charging control unit 611 and a battery management unit 612. The charging control unit 611 is electrically connected to the rectifier 4 and the charging reception coil 2, and is configured to monitor statuses such as a current, a voltage, and a temperature of the rectifier 4 and the charging reception coil 2. The battery management unit 612 is electrically connected to the battery core module 3, and is configured to monitor statuses such as a current, a voltage, and a temperature of the battery core module 3. The communications module 62 is electrically connected to the control module 61. The communications module 62 is a Wi-Fi module or a Bluetooth module, and is configured to implement wireless communication between the controller 6 and the power supply apparatus 10.

In this embodiment, the control module 61 of the controller 6 integrates the charging control unit 611 of the vehicle-mounted end component and the battery management unit 612 controlling the power battery pack. The controller 6 simultaneously controls the charging reception coil 2 and the rectifier 4 of the vehicle-mounted end component, and the battery core module 3 of the power battery pack, and there is no need to separately control the vehicle-mounted end component and the power battery pack by using a plurality of controllers. This not only reduces controller costs, but also avoids connection communication between the control unit 611 of the vehicle-mounted end component and the battery management unit 612 controlling the power battery pack, thereby saving terminal and bundle connections, reducing costs, and further optimizing a charging policy of the vehicle-mounted power battery 20 to a maximum extent.

When the vehicle-mounted power battery 20 assembled on the chassis 31 of the electric vehicle 300 needs to be charged, and the electric vehicle 300 travels to a location about five or six meters away from the power supply apparatus 10, a primary controller of the electric vehicle 300 sends a wakeup signal to the controller 6 of the vehicle-mounted power battery 20 by using the low-voltage interface 22. The charging control unit 611 of the control module 61 in the controller 6 receives the wakeup signal and sends the wakeup signal. The communications module 62 receives the wakeup signal and wirelessly sends the wakeup signal. The power supply apparatus 10 wirelessly receives the wakeup signal and prepares to charge. In addition, the battery management unit 612 of the control module 61 counts information such as a required charging current based on information such as a voltage and a temperature of the battery core module 3, and sends a control signal based on a counting result. The charging control unit 611 receives the control signal and sends the control signal. The communications module 62 receives the control signal and wirelessly sends the control signal. The power supply apparatus 10 wirelessly receives the control signal and transmits energy to the vehicle-mounted power battery 20 based on the control signal, to implement wireless communication between the controller 6 and the power supply apparatus 10.

In the vehicle-mounted power battery 20 provided in this embodiment, the charging reception coil 2 senses, by using the charging part 41, a high-frequency alternating magnetic field emitted by the power supply apparatus, to generate an alternating current, and outputs the alternating current to the rectifier 5. The rectifier 5 converts the alternating current into a direct current, and outputs the direct current to the battery core module 3. The battery core module 3 stores power, and outputs a high-voltage current to the external load through the high-voltage output interface 21, to implement a full charging, power storage, and discharging process of the vehicle-mounted power battery 20. The vehicle-mounted end component and the power battery pack are completely merged in terms of structure in the vehicle-mounted power battery 20 without using a high and low connection cable and interface between the vehicle-mounted end component and the power battery pack. When the vehicle-mounted power battery 20 is assembled on the electric vehicle 300, a structural design of the chassis 31 of the electric vehicle 300 does not need to be considered excessively, which can greatly simplify design work of the electric vehicle 300 and reduce design costs of the electric vehicle 300.

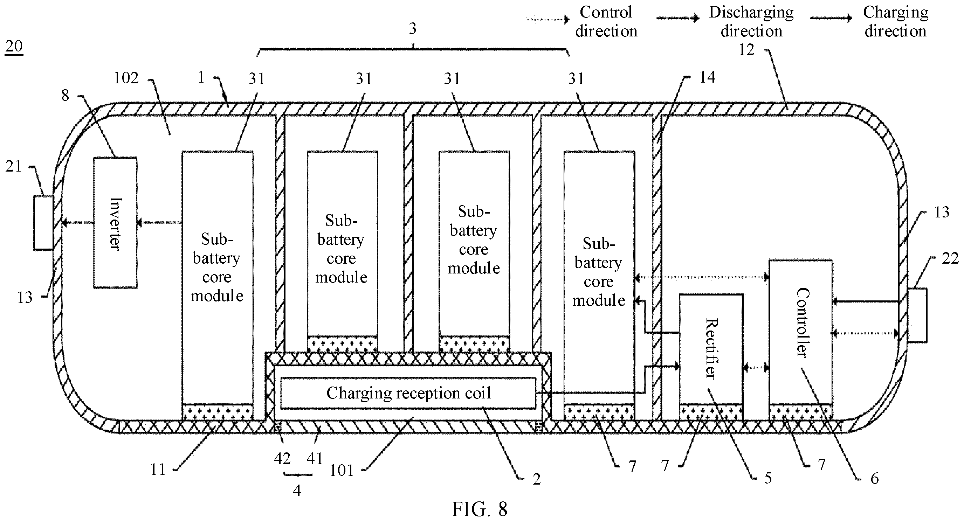

FIG. 8 is a schematic diagram of a structure of a second vehicle-mounted power battery 20 according to an embodiment of this application.

A difference between the vehicle-mounted power battery 20 provided in this embodiment of this application and the first vehicle-mounted power battery 20 lies in that the vehicle-mounted power battery 20 further includes an inverter 8. The inverter 8 is accommodated in the accommodation cavity 102 and electrically connected to the battery core module 3, and is configured to convert energy stored in the battery core module 3, and output converted energy to an external load 400. Specifically, the inverter 8 is connected between the battery core module 3 and the high-voltage output interface 21. When the vehicle-mounted power battery 20 provides a high-voltage alternating current to the external load 400, the inverter 8 converts a high-voltage direct current that is output by the battery core module 3 into a high-voltage alternating current, and then outputs the high-voltage alternating current to the external load 400 through the high-voltage output interface 21 by using a cable or a copper bar, to supply power to the external load 400.

In this embodiment, the inverter 8 is accommodated in the sub-accommodation cavity 103 in which the sub-battery core module 31 is located. Specifically, an assembly manner of the inverter 8 in the accommodation cavity 102 is the same as that of the rectifier 5 and the controller 6. The inverter 8 is installed in the protective housing, and the protective housing installed with the inverter 8 is further fastened to the sub-accommodation cavity 103 by using a stud. It can be understood that in another embodiment, the inverter may be accommodated in the sub-accommodation cavity in which the rectifier and the controller are located. This is not specifically limited in this application.

It should be noted that when the vehicle-mounted power battery 20 provided in the first embodiment needs to provide a high-voltage alternating current to the external load 400, a high-voltage direct current that is output by the battery core module 3 through the high-voltage output interface 21 needs to be first converted into a high-voltage alternating current outside the accommodation cavity 101 by using the inverter, and then the high-voltage alternating current is output to the external load. In the vehicle-mounted power battery 20 provided in this embodiment of this application, the inverter 8 is also integrated into the accommodation cavity 102 of the housing 1. The high-voltage direct current that is output by the battery core module 3 is first inverted into the high-voltage alternating current by the inverter 8, and then the high-voltage alternating current is output to the external load through the high-voltage output interface 22, so that the vehicle-mounted power battery 20 integrates charging, power storage, and discharging functions, thereby further reducing a volume, a weight, and costs of the vehicle-mounted power battery 20. A structure design, a heat dissipation system design, and an electrical design of the vehicle-mounted power battery 20 are more integrated, to simplify, to a maximum extent, design work of an electric vehicle on which the vehicle-mounted power battery 20 needs to be assembled, thereby reducing design and production costs of the electric vehicle.

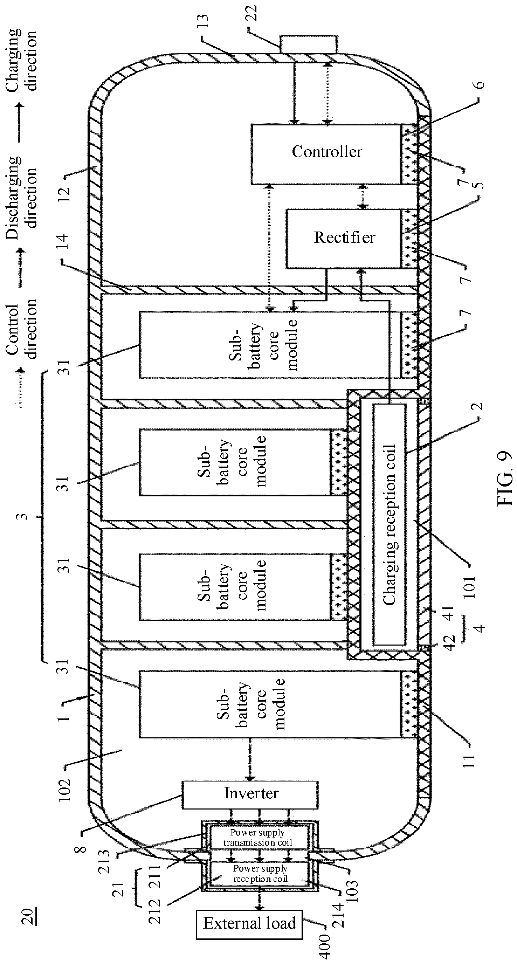

FIG. 9 is a schematic diagram of a structure of a third vehicle-mounted power battery 20 according to an embodiment of this application.

A difference between the vehicle-mounted power battery 20 provided in this embodiment of this application and the second vehicle-mounted power battery 20 lies in that the vehicle-mounted power battery 20 includes a power supply transmission coil 211 and a power supply reception coil 212. The power supply transmission coil 211 is located inside the accommodation cavity 101 and electrically connected to the inverter 8, and is configured to receive energy that is output by the inverter 8 and transmit the energy. The power supply reception coil 212 is located outside the accommodation cavity 101, and is configured to receive the energy transmitted by the power supply transmission coil 211 and output the energy to the external load 400, so that the vehicle-mounted power battery 20 wirelessly supplies power to the external load 400. Specifically, the power supply transmission coil 211 and the power supply reception coil 212 are located on two opposite sides of the side plate 13. The power supply transmission coil 211 is assembled in a first coil cover 213, and the first coil cover 213 is fastened, by using a screw, to a surface that is of the side plate 13 and that faces the accommodation cavity 101, so that the power supply transmission coil 211 is accommodated in the accommodation cavity 102, and is disposed close to the inverter 8, to reduce electromagnetic radiation. The power supply transmission coil 211 receives, by using a cable or a copper bar, a high-voltage alternating current that is output by the inverter 8, and the high-voltage alternating current flows in the power supply transmission coil 211 and generates an alternating magnetic field of a same frequency as the high-voltage alternating current. The power supply reception coil 212 is assembled in a second coil cover 214, and the second coil cover 214 is fastened, by using a screw, to a surface that is of the side plate 13 and that is away from the accommodation cavity 101. The power supply reception coil 212 couples, by using the side plate 13, alternating electromagnetic fields emitted by the power supply transmission coil 211, senses an induced current of a same frequency as the alternating electromagnetic field, and then outputs the induced current to the external load 400 by using a cable, to wirelessly supply power to the external load 400.

In this embodiment, both the first coil cover 213 and the second coil cover 214 are made of a metal material. The first coil cover 213 covers a surface that is of the power supply transmission coil 211 and that is not disposed opposite to the power supply reception coil 212, and the second coil cover 214 covers a surface that is of the power supply reception coil 212 and that is not disposed opposite to the power supply transmission coil 211, to shield an electromagnetic field leaked by the power supply transmission coil 211 and the power supply reception coil 212, reduce electromagnetic radiation of the vehicle-mounted power battery 20, and improve electromagnetic compatibility of the vehicle-mounted power battery 20.

It can be understood that compared with the charging transmission coil 103 and the charging reception coil 2, a distance between the power supply transmission coil 211 and the power supply reception coil 212 is smaller and a relative location is fixed, and efficiency of energy transmission between the power supply transmission coil 211 and the power supply reception coil 212 is high. Therefore, a coil with a smaller volume and weight may be used to reduce a volume and costs of the vehicle-mounted power battery 20.

In this embodiment, a gap 103 connected to the accommodation cavity 102 is disposed on the housing 1, and the power supply transmission coil 211 and the power supply reception coil 212 are respectively located on two sides of the gap 103. To be specific, the power supply reception coil 212 generates an induced current by sensing, by using the gap 103, an alternating electromagnetic field of the power supply transmission coil. It should be understood that the energy is transmitted between the power supply transmission coil 211 and the power supply reception coil 212 by using an alternating electromagnetic field induction principle. The gap 103 is disposed on the housing 1 made of a metal material to implement energy transmission between the power supply transmission coil 211 and the power supply reception coil 212, thereby effectively ensuring reliability of energy transmission, and implementing power supply from the vehicle-mounted power battery 20 to the external load 400.

In the vehicle-mounted power battery 20 provided in this embodiment of this application, the power supply transmission coil 211 and the power supply reception coil 212 are used to replace the high-voltage output interface 22 in the second embodiment. The charging reception coil 2, the battery core module 3, the rectifier 4, the controller 6, the inverter 8, and the power supply transmission coil 211 are all integrated in the accommodation cavity 102. All the components may be directly connected in the accommodation cavity 102, and a prior-art high and low voltage cable and connector between the vehicle-mounted end component and the power battery package and between the inverter and the external load is canceled, thereby not only reducing costs, but also improving electromagnetic shielding performance of the vehicle-mounted power battery 20.

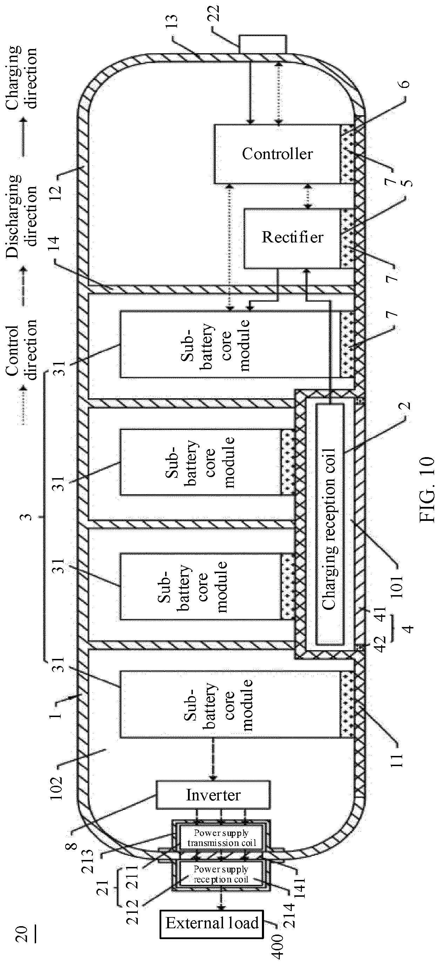

FIG. 10 is a schematic diagram of a structure of a fourth vehicle-mounted power battery 20 according to an embodiment of this application.

A difference between the vehicle-mounted power battery 20 provided in this embodiment of this application and the third vehicle-mounted power battery 20 lies in that the housing 1 includes a power supply part 141 and a body part. The power supply part 141 is made of a non-metal material. The power supply reception coil 212 receives, by using the power supply part 141, the energy transmitted by the power supply transmission coil 211. To be specific, the power supply reception coil 212 senses, by using the power supply part 141, the alternating magnetic field of the power supply transmission coil to generate an induced current. It should be understood that the energy is transmitted between the power supply transmission coil 211 and the power supply reception coil 212 by using an alternating electromagnetic field induction principle. The power supply part 141 made of the non-metal material effectively ensures energy transmission between the power supply transmission coil 211 and the power supply reception coil 212, so that the vehicle-mounted power battery 20 supplies power to the external load 400.

In an implementation, the power supply part 141 is a part that is of the side plate 13 and that is exactly opposite to the power supply transmission coil 211. To be specific, projection of the power supply transmission coil 221 on the side plate 13 exactly covers the power supply part 141, so that an alternating magnetic field generated at each location of the power supply transmission coil 211 can be transmitted to the power supply reception coil 212 by using the power supply part 141. It can be understood that in another implementation, the power supply part may not be the part that is of the side plate and that is exactly opposite to the power supply transmission coil. This is not specifically limited in this application.

The body part is made of a metal material, and the body part and the power supply part 141 form the accommodation cavity 102 through enclosure. Specifically, the body part includes a base plate 11, a part of the side plate 13 other than the power supply part 141, a top plate 12, and another side plate 13. To be specific, the base plate 11, the part of the side plate 13 other than the power supply part 141, the top plate 12, and the another side plate 13 are all made of a metal material, to centrally shield high-voltage devices, and greatly reduce electromagnetic radiation of the vehicle-mounted power battery 20, thereby not only reducing electromagnetic interference of the vehicle-mounted power battery 20 to another vehicle-mounted part, and improving electromagnetic compatibility of the vehicle-mounted power battery 20, but also ensuring a relatively low level of an electromagnetic field leaked by the vehicle-mounted power battery 20, and ensuring security of a person near the vehicle-mounted power battery 20.

In the vehicle-mounted power battery 20 provided in this embodiment of this application, the power supply transmission coil 211 and the power supply reception coil 212 are used to replace the high-voltage output interface 22 in the second embodiment. The charging reception coil 2, the rectifier 4, the battery core module 3, the controller 7, the inverter 8 and the power supply transmission coil 211 are all integrated in the accommodation cavity 101. All the components may be directly connected in the accommodation cavity 101, and a prior-art high and low voltage cable and connector between the vehicle-mounted end component and the power battery package and between the inverter and the external load is canceled, thereby not only reducing costs, but also improving electromagnetic shielding performance of the vehicle-mounted power battery 20.

It can be understood that in another embodiment of this application, when the vehicle-mounted power battery needs to implement low-voltage power supply to the external load, the low-voltage interface may be canceled. A high-voltage direct current output by the battery core module is converted into a low-voltage direct current by a component such as the inverter by using the direct-current voltage regulator; then the low-voltage direct current is converted into a low-voltage alternating current by using the inverter, and the low-voltage alternating current is output by using a pair of wireless power supply coil; and finally, the low-voltage alternating current is converted into a low-voltage direct current by using a component such as the rectifier, and the low-voltage direct current is output, to implement wireless low-voltage power supply to the external load.

In the chargeable/dischargeable energy storage system 100, the electric vehicle 300, and the vehicle-mounted power battery 20 provided in the embodiments of this application, the charging reception coil 2 and the battery core module 3 of the vehicle-mounted power battery 20 are integrated into one part by sharing the housing 1, and the charging reception coil 2 and the battery core module 3 can be installed only by separately installing the vehicle-mounted power battery 20. This simplifies structures of the vehicle-mounted power battery 20, the chargeable/dischargeable energy storage system 100, and the electric vehicle 300, shortens a production process, reduces complexity of assembly in a production line, and improving production efficiency.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle-mounted power battery (20) comprising a housing (1), a charging reception coil (2), and a battery core module (3),
wherein the housing (1) includes a base plate (11), a top plate (12) disposed opposite to the base plate (11), and two side plates (13) connected between the base plate (11) and the top plate (12), wherein the base plate (11) is concave in a direction facing the top plate (12) to form a recess (101) disposed on an outer surface of the housing (1), and the housing (1) further comprises an accommodation cavity (102) disposed in the housing (1);
the charging reception coil (2) is accommodated in the recess (101), and is configured to receive energy from a power supply apparatus (10) and output the energy; and
the battery core module (3) is accommodated in the accommodation cavity (102) and electrically connected to the charging reception coil (2),
and is configured to receive and store the energy output by the charging reception coil (2), wherein the housing is made of a metal material.

2. The vehicle-mounted power battery according to claim 1,
wherein the vehicle-mounted power battery further comprises a cover plate (4),
and the cover plate (4) is detachably assembled on the housing to cover the recess.

3. The vehicle-mounted power battery according to claim 2,
wherein the cover plate comprises a charging part (41),
the charging part (41) is made of a non-metal material,
and the charging reception coil receives the energy from the power supply apparatus by using the charging part (41).

4. The vehicle-mounted power battery according to claim 2,
wherein the vehicle-mounted power battery further comprises a rectifier (5);
the rectifier (5) is accommodated in the accommodation cavity and connected between the charging reception coil and the battery core module, and is configured to:
receive the energy output by the charging reception coil, convert the energy, and output converted energy;
and the battery core module is configured to receive and store the energy output by the rectifier (5).

5. The vehicle-mounted power battery according to claim 4,
wherein the vehicle-mounted power battery further comprises a heat sink,
and the heat sink is accommodated in the accommodation cavity or embedded in the housing, and is configured to dissipate heat from the charging reception coil, the rectifier, and the battery core module.

6. The vehicle-mounted power battery according to claim 5,
wherein the heat sink is a metal heat dissipation plate,
and the metal heat dissipation plate is located on a side that is of the charging reception coil and that is away from the cover plate.

7. The vehicle-mounted power battery according to claim 4,
wherein the vehicle-mounted power battery further comprises a controller (6),
the controller (6) is accommodated in the accommodation cavity and electrically connected to the charging reception coil, the battery core module, and the rectifier.

8. The vehicle-mounted power battery according to claim 1,
wherein the vehicle-mounted power battery further comprises an inverter (8),
and the inverter (8) is accommodated in the accommodation cavity and electrically connected to the battery core module, and is configured to convert energy stored in the battery core module, and output converted energy to an external load (400).

9. The vehicle-mounted power battery according to claim 8,
wherein the vehicle-mounted power battery further comprises a power supply transmission coil (211) and a power supply reception coil (212);
the power supply transmission coil (211) is located inside the accommodation cavity and electrically connected to the inverter, and is configured to receive the energy output by the inverter, and transmit the energy;
and the power supply reception coil (212) is located outside the accommodation cavity, and is configured to: receive the energy transmitted by the power supply transmission coil, and output the energy to the external load.

10. The vehicle-mounted power battery according to claim 9,
wherein a gap (103) connected to the accommodation cavity is disposed on the housing,
and the power supply transmission coil and the power supply reception coil are respectively located on two sides of the gap (103).

11. A chargeable/dischargeable energy storage system (100) comprising a power supply apparatus (10) and the vehicle-mounted power battery (20) according to any one of claims 1 to 10,
wherein the power supply apparatus (10) is configured to transmit energy,
and the vehicle-mounted power battery (20) is configured to receive and store the energy transmitted by the power supply apparatus (10).

12. An electric vehicle, comprising a vehicle body (30) and the vehicle-mounted power battery (20) according to any one of claims 1 to 10,
wherein the vehicle-mounted power battery (20) is detachably installed on a chassis (31) of the vehicle body (30).

## Patentansprüche

1. Fahrzeuggebundene Leistungsbatterie (20), die ein Gehäuse (1), eine Ladeempfangsspule (2) und ein Batteriekernmodul (3) aufweist,
wobei das Gehäuse (1) eine Grundplatte (11), eine obere Platte (12), die gegenüber der Grundplatte (11) angeordnet ist, und zwei Seitenplatten (13), die zwischen der Grundplatte (11) und der oberen Platte (12) verbunden sind, aufweist, wobei die Grundplatte (11) in einer Richtung, die der oberen Platte (12) zugewandt ist, konkav ist, um eine Aussparung (101) zu bilden, die an einer Außenfläche des Gehäuses (1) angeordnet ist, und das Gehäuse (1) ferner einen Aufnahmehohlraum (102) aufweist, der in dem Gehäuse (1) angeordnet ist;
die Ladeempfangsspule (2) in der Aussparung (101) untergebracht und dazu ausgelegt ist, Energie von einer Energieversorgungsvorrichtung (10) zu empfangen und die Energie abzugeben; und
das Batteriekernmodul (3) in dem Aufnahmehohlraum (102) untergebracht und mit der Ladeempfangsspule (2) elektrisch verbunden ist
und dazu ausgelegt ist, die von der Ladeempfangsspule (2) abgegebene Energie zu empfangen und zu speichern, wobei das Gehäuse aus einem Metallmaterial hergestellt ist.

2. Fahrzeuggebundene Leistungsbatterie nach Anspruch 1,
wobei die fahrzeuggebundene Leistungsbatterie ferner eine Abdeckplatte (4) aufweist, und die Abdeckplatte (4) an dem Gehäuse abnehmbar angebracht ist, um die Aussparung abzudecken.

3. Fahrzeuggebundene Leistungsbatterie nach Anspruch 2,
wobei die Abdeckplatte ein Ladeteil (41) aufweist,
das Ladeteil (41) aus einem nicht-metallischen Material hergestellt ist und die Ladeempfangsspule die Energie von der Energieversorgungsvorrichtung unter Verwendung des Ladeteils (41) empfängt.

4. Fahrzeuggebundene Leistungsbatterie nach Anspruch 2,
wobei die fahrzeuggebundene Leistungsbatterie ferner einen Gleichrichter (5) aufweist;
der Gleichrichter (5) in dem Aufnahmehohlraum untergebracht ist und zwischen die Ladeempfangsspule und das Batteriekernmodul geschaltet ist und dazu ausgelegt ist: die von der Ladeempfangsspule abgegebene Energie zu empfangen, die Energie umzuwandeln und umgewandelte Energie abzugeben;
und das Batteriekernmodul dazu ausgelegt ist, die von dem Gleichrichter (5) abgegebene Energie zu empfangen und zu speichern.

5. Fahrzeuggebundene Leistungsbatterie nach Anspruch 4,
wobei die fahrzeuggebundene Leistungsbatterie ferner einen Kühlkörper aufweist und der Kühlkörper in dem Aufnahmehohlraum untergebracht oder in das Gehäuse eingebettet ist und dazu ausgelegt ist, Wärme von der Ladeempfangsspule, dem Gleichrichter und dem Batteriekernmodul abzuleiten.

6. Fahrzeuggebundene Leistungsbatterie nach Anspruch 5,
wobei der Kühlkörper eine metallische Wärmeableitplatte ist und die metallische Wärmeableitplatte auf einer Seite angeordnet ist, die sich an der Ladeempfangsspule befindet und die von der Abdeckplatte entfernt ist.

7. Fahrzeuggebundene Leistungsbatterie nach Anspruch 4,
wobei die fahrzeuggebundene Leistungsbatterie ferner eine Steuereinrichtung (6) aufweist,
wobei die Steuereinrichtung (6) in dem Aufnahmehohlraum untergebracht ist und mit der Ladeempfangsspule, dem Batteriekernmodul und dem Gleichrichter elektrisch verbunden ist.

8. Fahrzeuggebundene Leistungsbatterie nach Anspruch 1,
wobei die fahrzeuggebundene Leistungsbatterie ferner einen Inverter (8) aufweist und der Inverter (8) in dem Aufnahmehohlraum untergebracht und mit dem Batteriekernmodul elektrisch verbunden ist und dazu ausgelegt ist, in dem Batteriekernmodul gespeicherte Energie umzuwandeln und umgewandelte Energie an eine externe Last (400) abzugeben.

9. Fahrzeuggebundene Leistungsbatterie nach Anspruch 8,
wobei die fahrzeuggebundene Leistungsbatterie ferner eine Energieversorgungsübertragungsspule (211) und eine Energieversorgungsempfangsspule (212) aufweist;
die Energieversorgungsübertragungsspule (211) sich in dem Aufnahmehohlraum befindet und mit dem Inverter elektrisch verbunden ist und dazu ausgelegt ist, die von dem Inverter abgegebene Energie zu empfangen und die Energie zu übertragen;
und die Energieversorgungsempfangsspule (212) sich außerhalb des Aufnahmehohlraums befindet und dazu ausgelegt ist: die von der Energieversorgungsübertragungsspule übertragene Energie zu empfangen und die Energie an die externe Last abzugeben.

10. Fahrzeuggebundene Leistungsbatterie nach Anspruch 9,
wobei ein Spalt (103), der mit dem Aufnahmehohlraum verbunden ist, an dem Gehäuse angeordnet ist
und die Energieversorgungsübertragungsspule und die Energieversorgungsempfangsspule jeweils auf zwei Seiten des Spalts (103) angeordnet sind.

11. Aufladbares/entladbares Energiespeichersystem (100), das eine Energieversorgungsvorrichtung (10) und die fahrzeuggebundene Leistungsbatterie (20) nach einem der Ansprüche 1 bis 10 aufweist,
wobei die Energieversorgungsvorrichtung (10) dazu ausgelegt ist, Energie zu übertragen
und die fahrzeuggebundene Leistungsbatterie (20) dazu ausgelegt ist, die von der Energieversorgungsvorrichtung (10) übertragene Energie zu empfangen und zu speichern.

12. Elektrofahrzeug, das einen Fahrzeugkörper (30) und die fahrzeuggebundene Leistungsbatterie (20) nach einem der Ansprüche 1 bis 10 aufweist,
wobei die fahrzeuggebundene Leistungsbatterie (20) auf einem Chassis (31) des Fahrzeugkörpers (30) abnehmbar montiert ist.

## Revendications

1. Batterie d'alimentation montée sur véhicule (20) comprenant un boîtier (1), une bobine de réception de recharge (2) et un module de noyau de batterie (3),
le boîtier (1) comprenant une plaque de base (11), une plaque supérieure (12) disposée à l'opposé de la plaque de base (11) et deux plaques latérales (13) reliées entre la plaque de base (11) et la plaque supérieure (12), la plaque de base (11) étant concave dans une direction faisant face à la plaque supérieure (12) afin de former un évidement (101) disposé sur une surface extérieure du boîtier (1), et le boîtier (1) comprenant en outre une cavité de réception (102) disposée dans le boîtier (1) ;
la bobine de réception de recharge (2) étant reçue dans l'évidement (101) et étant configurée pour recevoir de l'énergie en provenance d'un appareil d'alimentation (10) et délivrer en sortie l'énergie ; et
le module de noyau de batterie (3) étant reçu dans la cavité de réception (102) et connecté électriquement à la bobine de réception de recharge (2),
et étant configuré pour recevoir et stocker l'énergie délivrée en sortie par la bobine de réception de recharge (2), le boîtier étant constitué d'un matériau métallique.

2. Batterie d'alimentation montée sur véhicule selon la revendication 1,
la batterie d'alimentation montée sur véhicule comprenant en outre une plaque formant couvercle (4),
et la plaque formant couvercle (4) étant montée amovible sur le boîtier pour recouvrir l'évidement.

3. Batterie d'alimentation montée sur véhicule selon la revendication 2,
dans laquelle la plaque formant couvercle comprend une partie de recharge (41),
la partie de recharge (41) est constituée d'un matériau non métallique,
et la bobine de réception de recharge reçoit l'énergie en provenance de l'appareil d'alimentation au moyen de la partie de recharge (41).

4. Batterie d'alimentation montée sur véhicule selon la revendication 2,
la batterie d'alimentation montée sur véhicule comprenant en outre un redresseur (5) ; le redresseur (5) étant reçu dans la cavité de réception et connecté entre la bobine de réception de recharge et le module de noyau de batterie et étant configuré pour :
recevoir l'énergie délivrée en sortie par la bobine de réception de recharge, convertir l'énergie et délivrer en sortie l'énergie convertie ;
et le module de noyau de batterie étant configuré pour recevoir et stocker l'énergie délivrée en sortie par le redresseur (5).

5. Batterie d'alimentation montée sur véhicule selon la revendication 4,
la batterie d'alimentation montée sur véhicule comprenant en outre un dissipateur de chaleur,
et le dissipateur de chaleur étant reçu dans la cavité de réception ou intégré au boîtier et étant configuré pour dissiper la chaleur de la bobine de réception de recharge, du redresseur et du module de noyau de batterie.

6. Batterie d'alimentation montée sur véhicule selon la revendication 5,
dans laquelle le dissipateur de chaleur est une plaque métallique de dissipation de chaleur,
et la plaque métallique de dissipation de chaleur est située sur un côté de la bobine de réception de recharge, à l'écart de la plaque formant couvercle.

7. Batterie d'alimentation montée sur véhicule selon la revendication 4,
la batterie d'alimentation montée sur véhicule comprenant en outre un dispositif de commande (6),
le dispositif de commande (6) étant reçu dans la cavité de réception et connecté électriquement à la bobine de réception de recharge, au module de noyau de batterie et au redresseur.

8. Batterie d'alimentation montée sur véhicule selon la revendication 1,
la batterie d'alimentation montée sur véhicule comprenant en outre un onduleur (8),
et l'onduleur (8) étant reçu dans la cavité de réception et connecté électriquement au module de noyau de batterie et étant configuré pour convertir l'énergie stockée dans le module de noyau de batterie et délivrer en sortie l'énergie convertie à une charge externe (400).

9. Batterie d'alimentation montée sur véhicule selon la revendication 8,
la batterie d'alimentation montée sur véhicule comprenant en outre une bobine de transmission d'alimentation (211) et une bobine de réception d'alimentation (212) ;
la bobine de transmission d'alimentation (211) étant située à l'intérieur de la cavité de réception et connectée électriquement à l'onduleur et étant configurée pour recevoir l'énergie délivrée en sortie par l'onduleur et transmettre l'énergie ;
et la bobine de réception d'alimentation (212) étant située à l'extérieur de la cavité de réception et étant configurée pour : recevoir l'énergie transmise par la bobine de transmission d'alimentation et délivrer en sortie l'énergie à la charge externe.

10. Batterie d'alimentation montée sur véhicule selon la revendication 9,
dans laquelle un espace (103) relié à la cavité de réception est disposé sur le boîtier, et la bobine de transmission d'alimentation et la bobine de réception d'alimentation sont respectivement situées sur deux côtés de l'espace (103).

11. Système rechargeable/déchargeable de stockage d'énergie (100) comprenant un appareil d'alimentation (10) et la batterie d'alimentation montée sur véhicule (20) selon l'une quelconque des revendications 1 à 10,
l'appareil d'alimentation (10) étant configuré pour transmettre de l'énergie,
et la batterie d'alimentation montée sur véhicule (20) étant configurée pour recevoir et stocker l'énergie transmise par l'appareil d'alimentation (10).

12. Véhicule électrique, comprenant une carrosserie de véhicule (30) et la batterie d'alimentation montée sur véhicule (20) selon l'une quelconque des revendications 1 à 10,
la batterie d'alimentation montée sur véhicule (20) étant installée amovible sur un châssis (31) de la carrosserie de véhicule (30).
